(19) Europäisches Patentamt European Patent Office Office européen des brevets

(11) **EP 3 385 075 B1**

(12) **EUROPEAN PATENT SPECIFICATION**

(45) Date of publication and mention
of the grant of the patent:
**03.04.2019 Bulletin 2019/14**

(51) Int Cl.:
**B33Y 10/00** (2015.01)  **B33Y 30/00** (2015.01)
**B29C 64/112** (2017.01)  **B29C 64/232** (2017.01)
**B29C 64/209** (2017.01)  **B29C 64/236** (2017.01)
**B29C 64/245** (2017.01)  **B29C 64/264** (2017.01)
**B29C 64/227** (2017.01)

(21) Application number: **18159000.1**

(22) Date of filing: **27.02.2018**

(54) **METHOD OF FABRICATING A SOLID FREEFORM FABRICATION OBJECT AND DEVICE FOR FABRICATING A SOLID FREEFORM FABRICATION OBJECT**

VERFAHREN ZUR HERSTELLUNG EINES FESTEN FREIFORMFERTIGUNGSOBJEKTS UND VORRICHTUNG ZUR HERSTELLUNG EINES FESTEN FREIFORMFERTIGUNGSOBJEKTS

PROCÉDÉ DE FABRICATION D'UN OBJET DE FABRICATION DE FORME LIBRE SOLIDE ET DISPOSITIF DE FABRICATION D'UN OBJET DE FABRICATION DE FORME LIBRE SOLIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.03.2017 JP 2017049929**

(43) Date of publication of application:
**10.10.2018 Bulletin 2018/41**

(73) Proprietor: **Ricoh Company Ltd.**
**Ohta-ku**
**Tokyo 143-8555 (JP)**

(72) Inventors:
• **SUGIURA, Kenji**
**Ohta-ku, Tokyo 143-8555 (JP)**

• **NORIKANE, Yoshihiro**
**Ohta-ku, Tokyo 143-8555 (JP)**
• **NAITO, Hiroyuki**
**Ohta-ku, Tokyo 143-8555 (JP)**
• **SHIMADA, Yoshihito**
**Ohta-ku, Tokyo 143-8555 (JP)**

(74) Representative: **Watkin, Timothy Lawrence Harvey**
**Marks & Clerk LLP**
**Fletcher House**
**The Oxford Science Park**
**Heatley Road**
**Oxford OX4 4GE (GB)**

(56) References cited:
**WO-A1-2016/096054**   **US-A1- 2007 211 092**
**US-A1- 2016 059 482**   **US-A1- 2016 325 502**

**Description**

BACKGROUND

Technical Field

The present invention relates to a method of fabricating a solid freeform fabrication object according to claims 1 and 6 and a device for fabricating solid freeform fabrication object according to claim 9.

Description of the Related Art

As a method of fabricating a solid freeform fabrication object (three-dimensional object), a material jetting method is known, which includes discharging a fabrication material (modeling material) to a fabrication area to form a solid freeform fabrication object, discharging a supporting material to a non-fabrication area to support a form of the solid freeform fabrication object, curing the modeling material and the supporting material, fabricating a layered fabrication object (fabrication layer) including a modeling fabrication object of the cured modeling material and a supporting fabrication object of the cured supporting material, sequentially laminating the fabrication layers, and removing the supporting fabrication object to obtain a solid freeform fabrication object made of the modeling material.

Typically, the supporting material, which is the same as the modeling material, is removed by cutting or polishing. Alternatively, a water-soluble supporting material is used and dissolved in water to obtain a solid freeform fabrication object.

The fabrication time depends on the thickness of a single fabrication layer in the direction of height (Z axis direction). Therefore, it is advantageous to use a large droplet to shorten the fabrication time.

Therefore, discharged droplets are merged in the air to form a larger droplet.

However, multiple liquid droplets discharged by a discharging device while moving the discharging device have different velocity vectors in the direction of moving. As a result, the merged large droplet horizontally spreads and may mix with adjacent droplets at the time of landing.

In particular, the surface property of a solid freeform fabrication object obtained by the modeling material after removal of the supporting material deteriorates if the droplets of a modeling material are mixed with the droplets of the supporting material.

WO 2016/096054 A1 discloses a method for mixing a first stream of droplets with a second stream of droplets to obtain a stream of fused droplets.

US 2016/325502 A1 discloses a 3D printing method wherein a 3D model is divided into several area objects, which separately correspond to different areas of the 3D model being formed on a forming platform of the printer. Upon printing, an area object is stacked completely before moving onto another area.

SUMMARY

According to the present invention, provided is an improved method of fabricating a solid freeform fabrication object, which includes discharging multiple liquid droplets of modeling material and multiple liquid droplets of supporting material to a stage by a discharging device, merging the multiple liquid droplets of the modeling material into a liquid droplet of the modeling material in the air and the multiple liquid droplets of the supporting material into a liquid droplet of the supporting material in the air, curing the liquid droplet of the modeling material and the liquid droplet of the supporting material on the stage to form a layered fabrication object, and repeating the discharging and the curing to laminate the layered fabrication object to manufacture the solid freeform fabrication object, wherein the discharging device stands still during at least the discharging to a boundary area of the modeling material and the supporting material on the stage.

BRIEF DESCRIPTION OF THE SEVERAL VIEWS OF THE DRAWINGS

Various other objects, features and attendant advantages of the present disclosure will be more fully appreciated as the same becomes better understood from the detailed description when considered in connection with the accompanying drawings in which like reference characters designate like corresponding parts throughout and wherein:

FIG. 1 is a diagram illustrating a front elevation view of an example of the device to fabricate a solid freeform fabrication object according to an embodiment of the present application;
FIG. 2 is a diagram illustrating a planar view of the device illustrated in FIG. 1;
FIG. 3 is a diagram illustrating a side view of the device illustrated in FIG. 1;

FIG. 4 (FIG. 4A and FIG. 4B) is a block diagram illustrating the control unit of the device illustrated in FIG. 1;

FIGS. 5A and 5B are diagrams illustrating merger of two droplets discharged from a head;

FIGS. 6A and 6B are diagrams illustrating merger of three droplets discharged from a head;

FIG. 7 is a diagram illustrating the form of a merged droplet when two droplets are sequentially discharged from the head in motion and merged;

FIGS. 8A and 8B are diagrams illustrating a side view of the form of the liquid droplet on the same landing surface;

FIG. 9 is a diagram illustrating a planar view of the form of the liquid droplet on the same landing surface;

FIG. 10 is a diagram illustrating the form of a merged liquid droplet when two liquid droplets are sequentially discharged and merged in the first embodiment of the present disclosure;

FIGS. 11A and 11B are diagrams illustrating a side view of the form of the liquid droplet on the same landing surface;

FIG. 12 is a diagram illustrating a planar view of the form of the liquid droplet on the same landing surface; and

FIGS. 13A and 13B are diagrams illustrating the description of control of the moving speed of a fabrication unit in the second embodiment of the present disclosure.

The accompanying drawings are intended to depict example embodiments of the present invention and should not be interpreted to limit the scope thereof. The accompanying drawings are not to be considered as drawn to scale unless explicitly noted. Also, identical or similar reference numerals designate identical or similar components throughout the several views.

## DESCRIPTION OF THE EMBODIMENTS

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

As used herein, the singular forms "a", "an", and "the" are intended to include the plural forms as well, unless the context clearly indicates otherwise.

Moreover, image forming, recording, printing, modeling, etc. in the present disclosure represent the same meaning, unless otherwise specified.

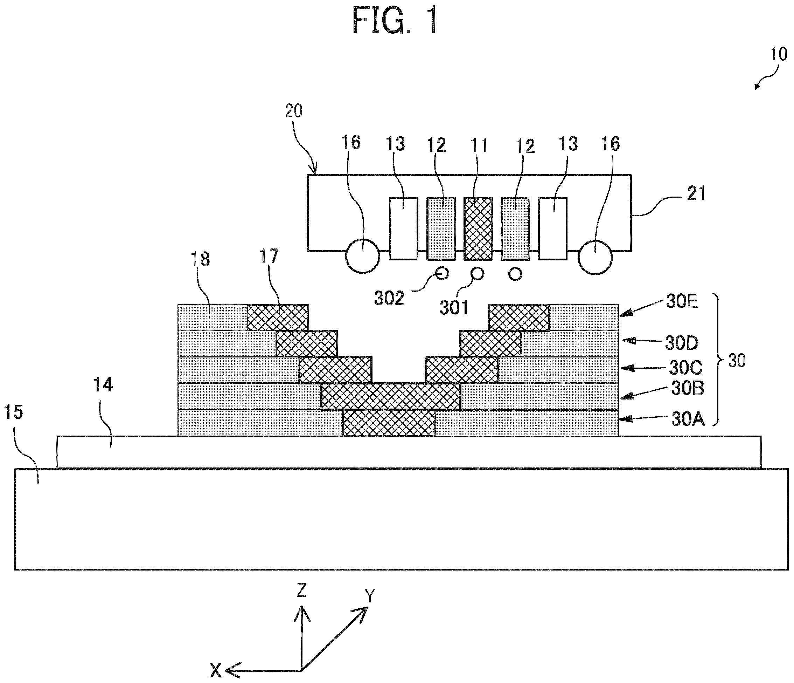

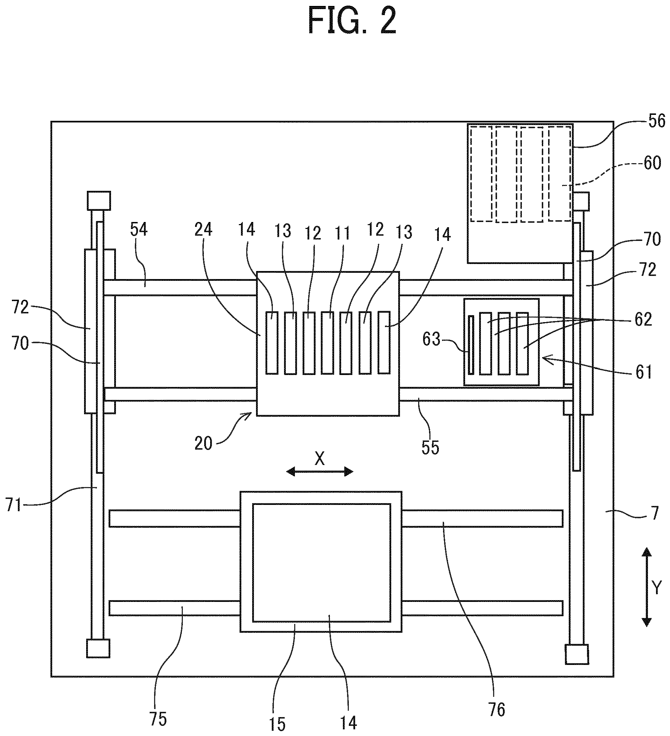

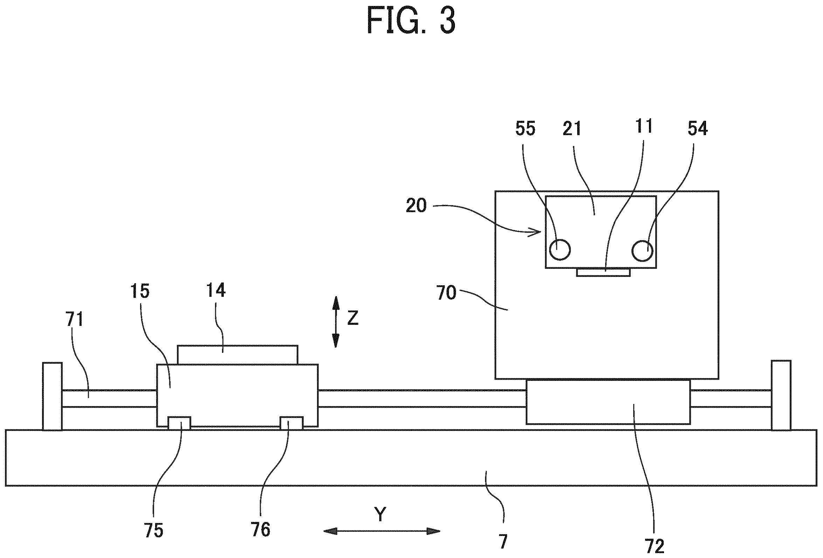

Embodiments of the present disclosure are described with reference to the accompanying drawings. Next, an example of the device for fabricating a solid freeform fabrication object relating to the present disclosure is described with reference to FIG. 1 to FIG. 3. FIG. 1 is a diagram illustrating a front elevation view of the device, FIG. 2 is a diagram illustrating a planar view of the device, and FIG. 3 is a diagram illustrating a side view of the device.

This device (solid freeform fabrication device) 10 to fabricate a solid freeform fabrication object is a material jetting fabrication device, which includes a stage 14, on which a fabrication layer 30 as a layered fabrication object is laminated to fabricate the solid freeform fabrication object, and a fabrication unit 20 to sequentially laminate the fabrication layer 30 on the stage 14.

The fabrication unit 20 includes in a unit holder 21 a first head 11 as a discharging device to discharge a modeling material, a second head 12 as a discharging device to discharge a supporting material, an ultraviolet ray (UV) irradiating unit (curing device) 13 to emit ultraviolet rays as an active energy ray, and a flattening roller 16 as a flattening device to flatten the fabrication layer 30.

In this embodiment, the first head 11 is disposed between the two second heads 12 along the X direction, the UV irradiation unit 13 is disposed outside each of the two second heads 12, and the flattening roller 16 is disposed outside each of the UV irradiation units 13.

To the first head 11 and the second head 12, the modeling material and the supporting material are supplied via a supply tube by a cartridge 60 replaceably mounted onto a cartridge insertion unit 56. To use a modeling material having color such as black, cyan, magenta, and yellow, it is suitable to use the first head 11 having multiple nozzle lines to discharge each color material.

The UV irradiation unit 13 cures the fabrication layer 30 made of the modeling material discharged from the first head 11 and the supporting material discharged from the second head 12. For an ultraviolet ray irradiation lamp, it is preferable to provide a mechanism to remove ozone produced during ultraviolet ray irradiation. The ultraviolet ray irradiation lamp includes, for example, a high pressure mercury lamp and an ultra high pressure mercury lamp, and a metal halide lamp. The ultra-high pressure mercury lamp is a point light source. However, a UV irradiation lamp combined with an optical system to have a high light use efficiency is capable of emitting light in a short-wavelength range. To cure colored material, metal halide is advantageous because it has a wide range of wavelengths. Metal halides of metal such as Pb, Sn, and Fe are used and selected in accordance with absorption spectrum of a polymerization initiator.

The flattening roller 16 rotates and flattens the surface of the fabrication layer 30 cured on the stage 14 due to the relative movement to the stage 14. "On the stage 14" includes the stage 14 and the fabrication layer 30 laminated on the stage 14 unless otherwise specified.

The unit holder 21 of the fabrication unit 20 is held movable on guiding members 54 and 55 disposed along the X direction.

In addition, on one side of the fabrication unit 20 along the X direction, a maintenance mechanism 61 is disposed to maintain and restore the first head 11 and the second head 12.

The maintenance mechanism 61 is mainly constituted of a cap 62 and a wiper 63. The cap 62 is caused to adhere to the nozzle surfaces (on which the nozzle is formed) of the first head 11 and the second head 12 in order to suction the fabrication liquid (modeling material and supporting material) from the nozzle. This is to eject highly-thickened fabrication liquid clogged in the nozzle. Thereafter, due to the meniscus forming (negative pressure in the nozzle) of the nozzle, the wiper 63 wiped off the nozzle surface. In addition, when the fabrication liquid is not discharged, the maintenance mechanism 61 covers the nozzle surface with the cap 62 to prevent drying of the fabrication liquid.

The guiding members 54 and 55 holding the unit holder 21 of the fabrication unit 20 are held by side plates 70 on both sides. The side plates 70 include slider portions 72 held movable by the guiding member 71 disposed on a base member 7, and the fabrication unit 20 can reciprocate in the Y direction perpendicular to the X direction.

A lifting device 15 lifts the stage 14 up and down along the Z direction. The lifting device 15 is disposed movable on guiding members 75 and 76 disposed along the X direction.

Next, fabrication operation of the solid freeform fabrication device 10 is described with reference to in particular FIG. 1.

The fabrication unit 20 is moved along the Y direction to be positioned on the stage 14.

While the stage 14 is moved against the fabrication unit 20 standing still, the first head 11 discharges a modeling material 301 to a fabrication area (area constituting a solid freeform fabrication object), and the second head 12 discharges a supporting material 302 to a supporting area (area removed after fabrication) other than the fabrication area.

The UV irradiation units 13 irradiates the modeling material 301 and the supporting material 302 with ultraviolet rays to cure them, thereby forming the fabrication layer 30 corresponding to an amount of a single layer of a modeling material fabrication object 17 and a supporting material fabrication object 18.

This fabrication layer 30 is laminated to fabricate a target solid freeform fabrication object of the modeling material 301, which is supported by the supporting material 302. For example, five layers of the fabrication layers 30A to 30E are laminated in the example illustrated in FIG. 1.

The fabrication layer 30 is not necessarily limited to a particularly fixed number of layers. For example, every time ten layers are laminated, the flattening roller 16 is pressed against the uppermost fabrication layer 30, so that the thickness accuracy and flattening property of the fabrication layer 30 can be secured.

For a member having a roller-like form such as the flattening roller 16, such a member is reversely rotated against the direction of movement along the X direction to further ameliorate flattening (smoothing) performance.

In addition, to keep the gap between the fabrication unit 20 and the uppermost fabrication layer 30, the lifting device 15 lifts the stage 14 down every time a single layer of the fabrication layer 30 is formed. Also, a configuration to lift the fabrication unit 20 up and down is allowed.

In addition, the solid freeform fabrication device may furthermore optionally include a mechanism for collecting and recycling the modeling material 301 and the supporting material 302. In addition, it may furthermore optionally include a discharging state detector to detect non-discharging nozzles of the first head 11 and the second head 12. Moreover, it is preferable to control the environment temperature in the device during fabrication.

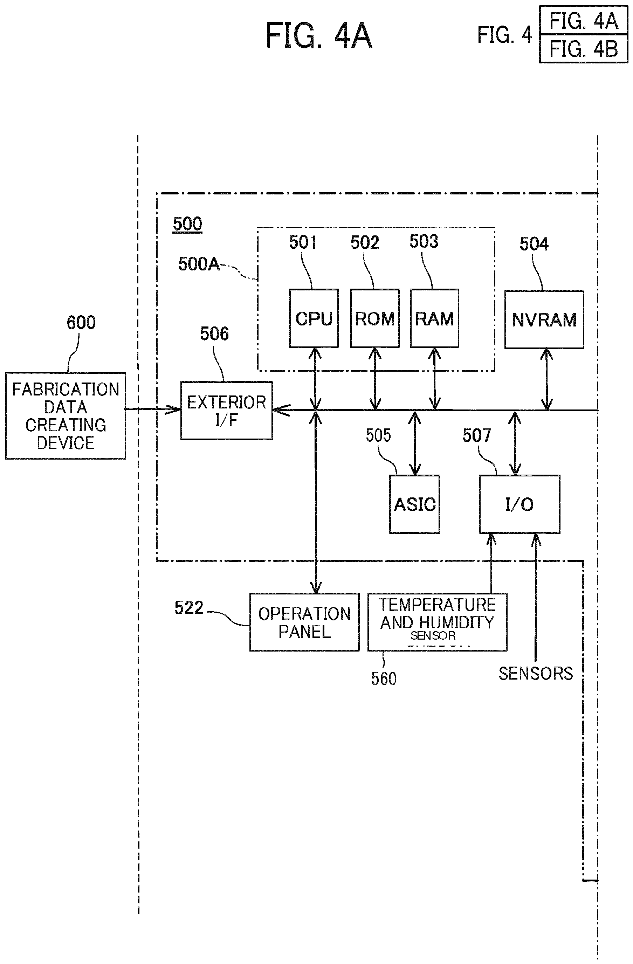

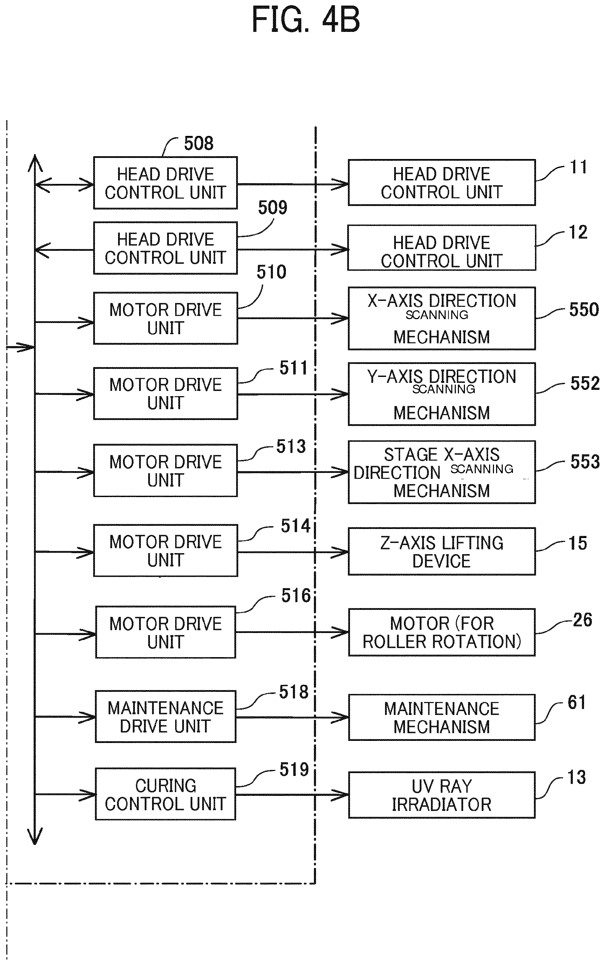

Next, the control unit of the solid freeform fabrication device is described with reference to FIG. 4. FIG. 4 is a block diagram illustrating the control unit.

A control unit 500 includes a main control unit 500A including a CPU 501 taking a control of the entire device, a read-only memory (ROM) 502 to store programs to execute control of the fabrication instructions executed by the central processing unit (CPU) 501 and other fixed data, and a random access memory (RAM) 503 to temporarily store fabrication (modeling) data, etc.

The control unit 500 includes a non-volatile random access memory (NVRAM) 504 to hold data while the power of the device is blocked off. In addition, the control unit 500 includes an application specific integrated circuit (ASIC) 505 for image processing of various signal processing for image data and processing input and output signals to control the entire device.

The control unit 500 includes an interface (I/F) 506 to send and receive data and signals to be used at receiving fabrication data from an external fabrication data creating device 600.

The fabrication data creating device 600 creates fabrication data (cross-section data), which is slice data obtained by slicing a target solid object into respective fabrication layers. The fabrication data creating device 600 includes an information processing device such as a home computer.

The control unit 500 includes an input-output (I/O) 507 to take in the detected signals of various sensors.

The control unit 500 includes a head drive control unit 508 to drive and control the first head 11 of the fabrication unit 20 and a head drive control unit 509 to drive and control the second head 12 thereof.

The control unit 500 includes a motor drive unit 510 to drive motors constituting an X direction scanning mechanism 550 to move the fabrication unit in the X direction and a motor drive unit 511 to drive motors constituting a Y direction scanning mechanism 552 to move the fabrication unit 20 in the Y direction (sub-scanning direction).

The control unit 500 includes a motor drive unit 513 to drive a motor, which constitutes an X direction scanning mechanism 553 to move the lifting device 15 together with the stage 14 in the X direction and a motor drive unit 514 to drive a motor, which constitutes the lifting device 15 to lift the stage 14 up and down in the Z direction. A configuration to elevate the fabrication unit 20 as described above allows elevation in the Z direction.

The control unit 500 includes a motor drive unit 516 to drive a motor 26 to rotate and drive the flattening roller 16 and a maintenance drive unit 518 to drive a maintenance mechanism 61 of the first head 11 and the second head 12.

The control unit 500 includes a curing control unit 519 to control ultraviolet ray irradiation by a UV irradiation unit 13.

Detected signals of a temperature and humidity sensor 560 to detect the temperature and the humidity as the environment condition of the device and detected signals from other sensors are input into an I/O 507 of the control unit 500.

The control unit 500 is connected with an operation panel 522 to input and display information required for the device.

As described above, the control unit 500 receives fabrication data from the fabrication data creating device 600. The fabrication data includes data (data of fabrication area) to form the modeling material fabrication object 17 in each fabrication layer 30 as the slice data obtained by slicing the form of the target solid freeform fabrication object.

The main control unit 500A creates data in which data for the supporting area to apply the supporting material to is added to the fabrication data (data for fabrication area) and provides the data to the head drive control units 508 and 509. The head drive control units 508 and 509 cause the first head 11 to discharge liquid droplets of the liquidized modeling material 301 to the fabrication area and the second head 12 to discharge liquid droplets of the liquidized supporting material 302 to the supporting area.

The fabrication device includes the fabrication data creating device 600 and a solid freeform fabrication device 10.

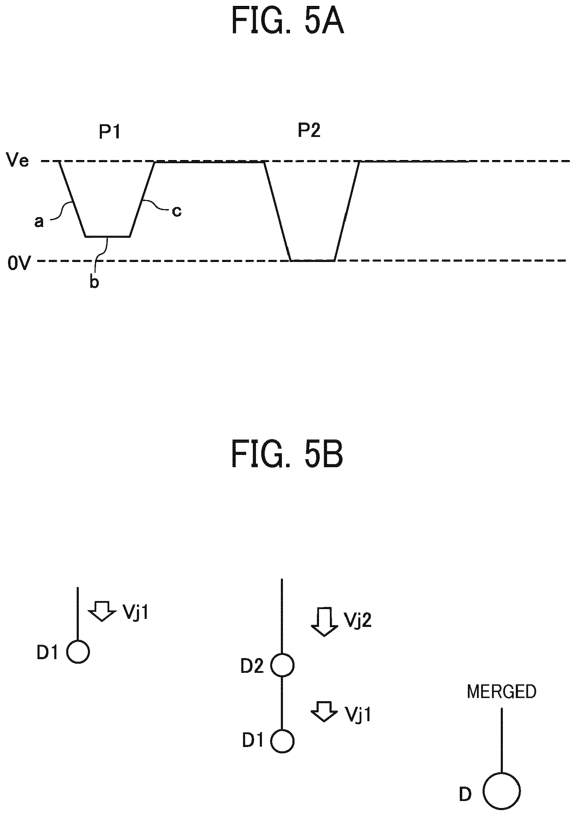

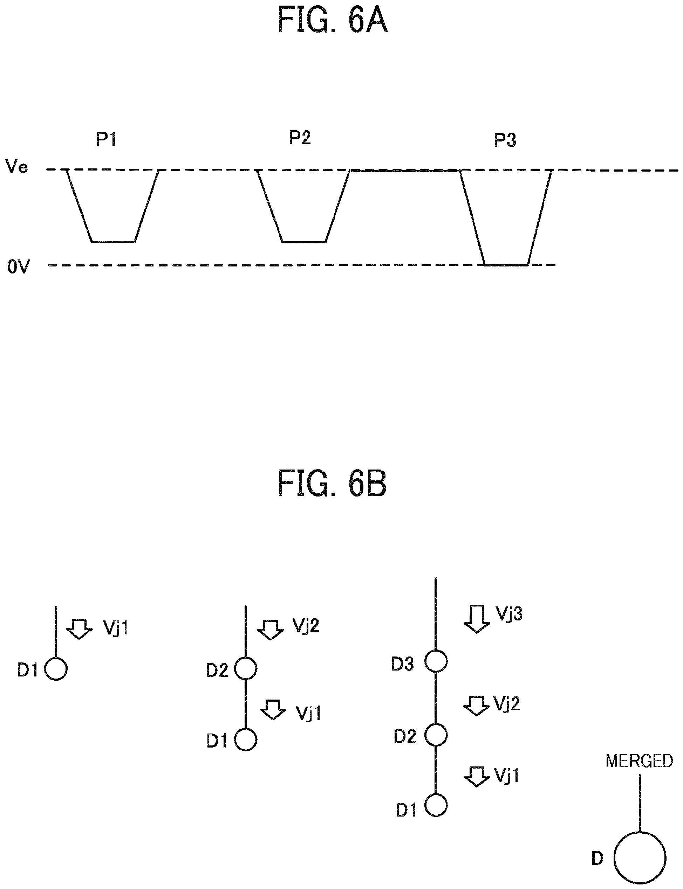

Next, droplet discharging drive control for the first head 11 and the second head 12 is described with reference to FIGS. 5 and 6. FIG. 5 is a diagram illustrating merger of two droplets to form a liquid droplet (large droplet) and FIG. 6 is a diagram illustrating merger of three droplets to form a liquid droplet (large droplet).

As the first head 11 and the second head 12, a liquid discharging head using a piezoelectric element as a pressure generating device is described in this embodiment. In addition, the first head 11 is described, which is applicable to the second head 12.

In the embodiment illustrated in FIGS. 5A and 5B, as illustrated in FIG. 5A, drive pulses P1 and P2 are sequentially applied to the piezoelectric element of the first head 11 to sequentially discharge two droplets D1 and D2 from the nozzle as illustrated in FIG. 5B.

The drive pulses P1 and P2 are constituted of a waveform element a where an intermediate voltage Ve rises down to a particular rising-down voltage, a waveform element b holding the particular rising-down voltage, and a waveform element c where the particular rising-down voltage rises to the intermediate voltage Ve. An individual liquid chamber communicating with the nozzle inflates upon an application of the waveform element a and shrinks upon an application of the waveform element c, so that a droplet is discharged from the nozzle.

If the particular rising-down voltage of the drive pulse P1 is higher than the particular rising-down voltage of the drive pulse P2 (i.e., voltage between the rising-down voltage and the intermediate voltage Ve is increased) and a constant during the rising-up is the same, a droplet velocity Vj2 of the droplet D2 due to the drive pulse P2 is faster than a droplet velocity Vj1 of the droplet D1 due to the drive pulse P1.

According to this selection of the droplet velocity Vj2 and the droplet velocity Vj1, the droplet D2 catches up with the droplet D1 so that the droplets merge in the air to form a single liquid droplet D.

In the embodiment illustrated in FIGS. 6A and 6B, as illustrated in FIG. 6A, drive pulses PI, P2, and P3 are sequentially applied to the piezoelectric element of the first head 11, from which three droplets D1, D2, and D3 are sequentially discharged as illustrated in FIG. 6B.

If a droplet velocity Vj3 of the droplet D3 due to the drive pulse P3 is set to be the fastest of the three, the droplet D3 catches up with the droplet D2, and further catches up with the droplet D1, so that the three droplets merge in the air to form a single liquid droplet D.

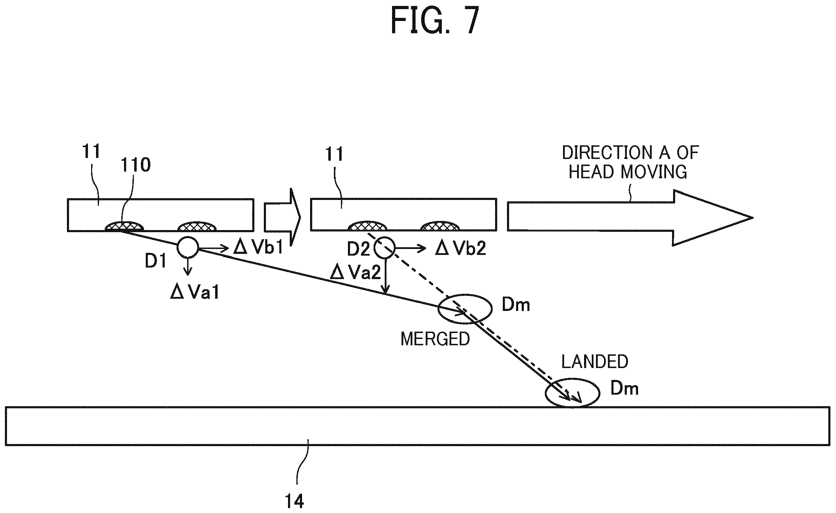

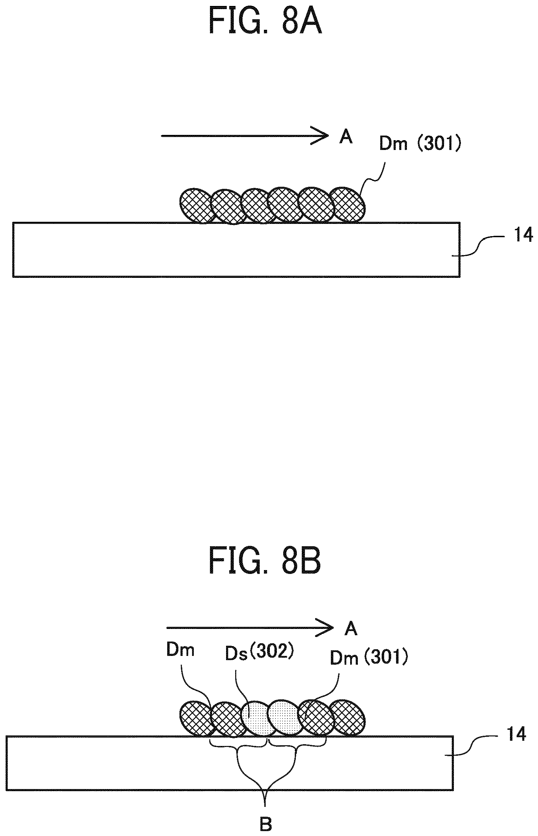

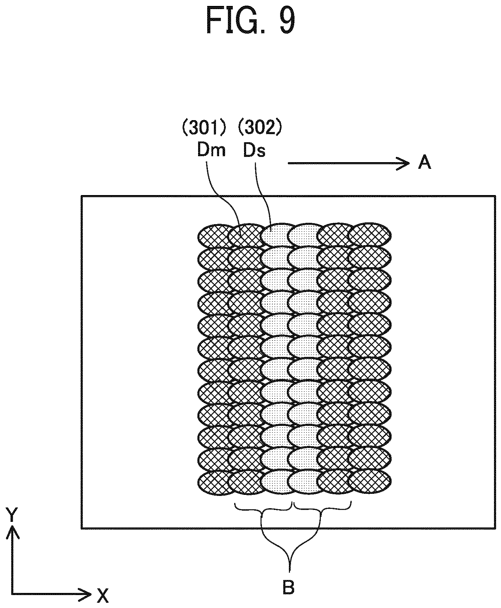

Next, the form of droplets discharged while the first head 11 and the second head 12 are moving is described with reference to FIGS. 7, 8A, 8B, and 9. FIGS. 7A and 7B are diagrams illustrating the merger and landing position of two droplets sequentially discharged. FIGS. 8A and 8B are diagrams illustrating a side view of the form of the liquid droplet on the surface of landing. FIG. 9 is a diagram illustrating a planar view of the form of the liquid droplet on the surface of landing. The surface of landing described here is the stage 14 when the first fabrication layer is formed. For a fabrication layer formed after the second fabrication layer or later, the fabrication layer formed therebelow is the surface of landing.

With reference to FIG. 7, while the first head 11 is moving in the X direction (the direction A of moving of the head), the droplets D1 and D2 are sequentially discharged from a nozzle 110 of the first head 11 and form the liquid droplet D merged in the air, which lands on the stage 14.

The velocity vector of the droplet D1 is a synthesis of a vertical vector ΔVa1 in the landing direction (direction vertical to the surface of landing) and a horizontal vector ΔVb1 in the direction of moving of the head. The velocity vector of the droplet D2 is similarly a synthesis of a vertical vector ΔVa2 in the landing direction (direction vertical to the surface of landing) and a horizontal vector ΔVb2 in the direction of moving of the head.

The vertical vectors ΔVa1 and ΔVa2 are along the landing direction so that the addition of the vectors at the merger of the droplets D1 and D2 does not change the dimension of the liquid droplet Dm in the horizontal direction. However, the addition of the horizontal vectors ΔVb1 and ΔVb2 at the merger of the droplets D1 and D2 change the dimension of the liquid droplet Dm in the horizontal direction.

That is, as illustrated in FIG. 8A, the liquid droplet Dm of the modeling material 301 discharged from the first head 11 lands in an elongated form, i.e., ellipsoidal form, along the direction A of moving of the head, and the liquid droplets Dm adjacent to each other along the direction A of moving of the head overlap.

Similarly, as illustrated in FIG. 8B and FIG. 9, the liquid droplet Dm of the modeling material 301 discharged from the first head 11 and the liquid droplet Ds of the supporting material 302 discharged from the second head 12 land in a form elongated along the direction A of moving of the head.

Therefore, not only the liquid droplets Dm adjacent to each other along the direction A of moving of the head but also the liquid droplet Dm and the liquid droplet Ds overlap. This occurs before curing so that the modeling material 301 and the supporting material 302 are mixed in a boundary area B.

The liquid droplets are ellipsoidal, which is horizontally long. Depending on the conditions such as temperature, humidity, and deterioration of viscosity of liquid and state of head over time, the quantity of motion of the liquid droplets along the horizontal direction is slightly different, which changes the dimension at the time of landing. Accordingly, it is not possible to control the timing of discharging of liquid droplets for all of the printing conditions, thereby causing overlaps of the liquid droplets.

If such mixing of the modeling material and the supporting material occurs, the surface property at the boundary surface between the modeling material and the supporting material deteriorates when the supporting material is removed, thereby degrading the quality of fabrication.

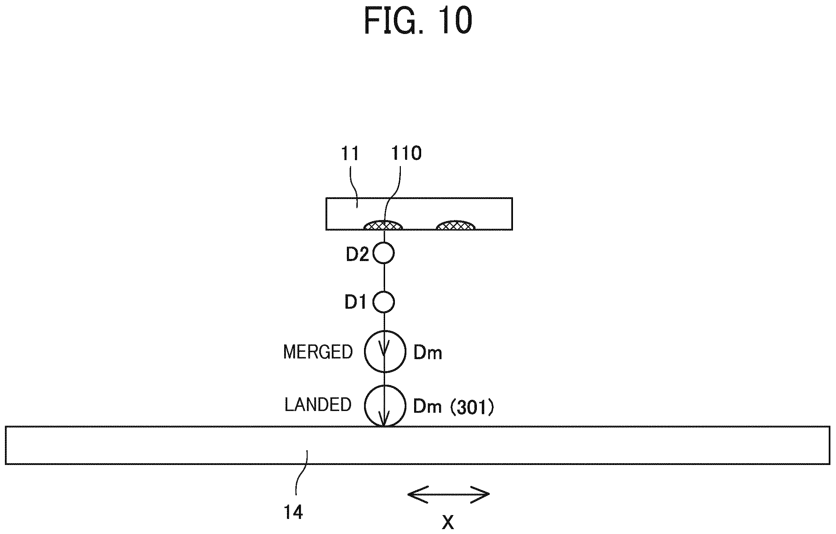

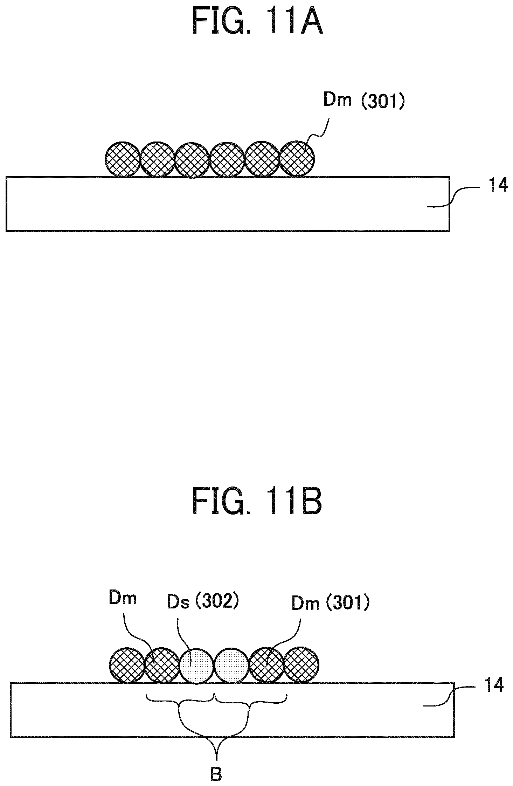

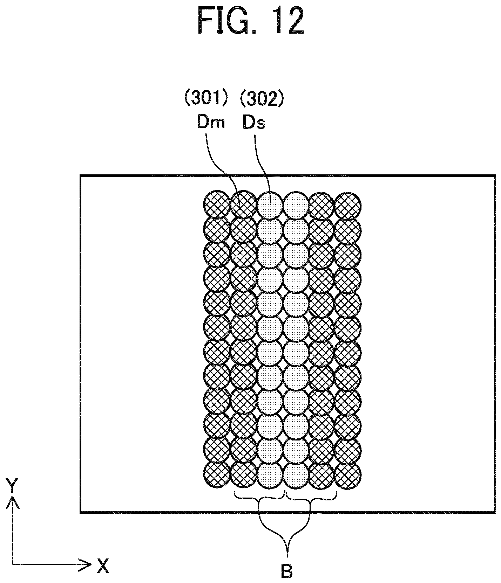

Next, the first embodiment of the present disclosure will be described with reference to FIGS. 10, 11A, 11B, and FIG. 12. FIG. 10 is a diagram illustrating the merger and the landing position for two droplets sequentially discharged in this embodiment. FIGS. 11A and 11B are diagrams illustrating side views of the form of the liquid droplet on the surface of landing. FIG. 12 is a diagram illustrating a planar view of the form of the liquid droplet on the surface of landing.

In this embodiment, the fabrication unit 20 including the first head 11 and the second head 12 stand still in the X direction at the time of discharging the droplets. Droplets of the modeling material 301 and droplets of the supporting material 302 are discharged from the first head 11 and the second head 12 while the stage 14 is moving, i.e., scanning, in the X direction.

Therefore, for example, as illustrated in FIG. 10, when multiple liquid droplets of D1 and D2 of the modeling material 301 are discharged from the first head 11, the form change of the liquid droplet Dm along the horizontal direction (X direction) is reduced even when the droplets D1 and D2 are merged in the air because the droplets D1 and D2 include no horizontal vectors. Similarly, the form change of the liquid droplet Ds in the horizontal direction (X direction) can be reduced even when multiple liquid droplets of the supporting material 302 are discharged from the second head 12 to obtain the liquid droplet Ds.

As illustrated in FIG. 11A, the liquid droplet Dm of the modeling material 301 discharged from the first head 11 can land on the target landing position with a target resolution.

Similarly, as illustrated in FIGS. 11B and FIG. 12, the liquid droplet Dm of the modeling material 301 discharged from the first head 11 and the liquid droplet Ds of the supporting material 302 discharged from the second head 12 can land on the target landing position with a target resolution at the boundary area B between the liquid droplet Dm and the liquid droplet Ds.

Therefore, at the border between the modeling material 301 (modeling material fabrication object 17) and the supporting material 302 (supporting material fabrication object 18), the liquid droplet Dm of the modeling material 301 and the liquid droplet Ds of the supporting material 302 may be slightly but not excessively mixed.

In particular, when a water-soluble article is used as the supporting material 302, affinity with the modeling material is good during fabrication so that the liquid droplets of the modeling material and the supporting material tend to mix at the time of landing. In such a case, excessive mixing can be prevented.

In this embodiment, the discharging devices (the first head 11 and the second head 12) stand still when multiple liquid droplets of the modeling material and the supporting material are discharged from the discharging devices to the boundary area of the modeling material and the supporting material while the liquid droplets of the modeling material and the supporting material are formed by merging the respective multiple liquid droplets of the modeling material and the supporting material in the air. This ameliorates the surface property of the surface of the modeling material after removing the supporting material.

In this embodiment, the stage 14 is moving against the first head 11 and the second head 12 as the discharging devices when the first head 11 and the second head 12 discharge liquid droplets.

Therefore, during the fabrication in the area of a single scan in the X direction, the first head 11 and the second head 12 always stand still when discharging droplets, including the boundary area between the modeling material and the supporting material.

In such a simple configuration, it is possible to discharge droplets, including to the boundary area of the modeling material and the supporting material while the discharging devices (first head 11 and the second head 12) stands still.

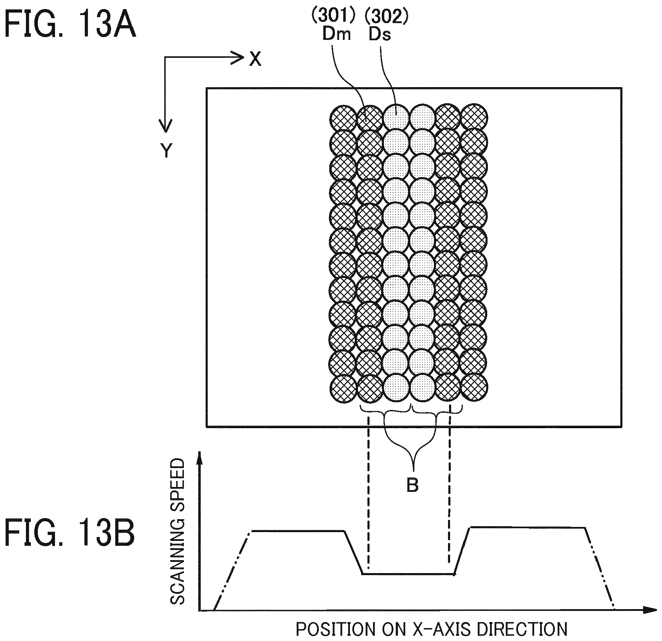

Next, the second embodiment of the present disclosure is described with reference to FIG. 13. FIGS. 13A and 13B are diagrams for use in a description of the control of the speed of moving of the fabrication unit.

In this embodiment, the fabrication unit 20 scans in the X direction, discharging droplets while the stage 14 does not move in the X direction.

Moreover, the scanning speed (moving speed) of the fabrication unit 20 is reduced in the boundary area between the modeling material and the supporting material to reduce the change of the form of the liquid droplets merged in the air. It is also possible to move the fabrication unit 20 incessantly, in which the fabrication unit 20 is held every time droplets are discharged to the boundary area.

In such a case, in the boundary area along the scanning direction of the fabrication unit 20, the change of the form of the liquid droplet along the scanning direction causes no mixing of the modeling material and the supporting material. Therefore, scanning speed of the fabrication unit 20 can be reduced or no incessant moving is necessary.

The boundary area between the modeling material and the supporting material has a width corresponding to a particular number (at least one) of droplets equal to or greater than a single droplet from the border of the modeling material and the supporting material.

The supporting material is described next. The liquidized supporting material is referred to as form supporting liquid and the supporting material after curing is referred to as cured material.

The supporting material (form supporting liquid) contains a monomer A having a hydrogen bond power, a solvent B having a hydrogen bond power, and a polymerization initiator C. The solvent B is at least one member selected from the group consisting of diol having 3 to 6 carbon atoms, a carboxylic acid compound, an amine compound, an ester compound, a ketone compound, and a urea compound. It may also furthermore optionally contain other components.

The supporting material having good solubility is easily removed but has poor removability. In addition, to manufacture a fabrication object having a large fabrication volume in accordance with jumboidization of a fabrication device, the power to support a form is insufficient.

The supporting material preferably has a water decaying property. The water decaying property means that when a cured object is dipped in water, the cured object is finely decomposed and cannot maintain the original form or properties.

The supporting material preferably satisfies the following condition 1.

Condition 1

When a cured object having a dimension of 20 mm $\times$ 20 mm $\times$ 5 mm obtained by irradiation of ultraviolet rays in an amount of 500 mJ/cm$^2$ with an ultraviolet irradiator is placed in 20 mL of water and left still at 25 degrees C for one hour, the cured object is completely dissolved in the water or becomes a solid having a size of 1 mm or less at least in one direction.

The cured object having a dimension of 20 mm $\times$ 20 mm $\times$ 5 mm can be manufactured in the following manner.

A liquid to support the form is poured into a silicone rubber mold having a dimension of 20 mm $\times$ 20 mm $\times$ 5 mm and irradiated by an ultraviolet irradiator (SubZero-LED, manufactured by Integration Technology Japan) with ultraviolet rays in an irradiation amount of 500 mJ/cm$^2$ (illuminance: 100 mW/cm$^2$, irradiation time: 5 seconds) to obtain 2 g of the cured object of the supporting material having a dimension of 20 mm $\times$ 20 mm $\times$ 5 mm.

Additionally, the supporting material preferably satisfies the following condition 2.

Condition 2

When a cured object obtained by irradiation of ultraviolet rays in an amount of 500 mJ/cm$^2$ by an ultraviolet irradiator has a compression stress of 2.0 kPa or greater at 1 percent compression at 25 degrees C and 2 g of the cured object is placed in 20 ml of water and left still at 25 degrees C for one hour, the remaining solid object has a volume of 50 percent by volume or less. The volume of the remaining solid object can be measured by Archimedes' Law.

When the cured solid object obtained by irradiation of ultraviolet rays in an amount of 500 mJ/cm$^2$ by an

ultraviolet irradiator satisfies the above-mentioned conditions, the ability of the supporting material for supporting the form can be enhanced.

A cured solid object obtained by irradiation of ultraviolet rays in an amount of 500 mJ/cm$^2$ by an ultraviolet irradiator preferably has a compression stress of 0.5 kPa or more at 1 percent compression at 25 degrees C. When the compression stress at 1 percent compression is 0.5 kPa or greater, the ability of the supporting material to support the form is enhanced.

The compression stress at 1 percent compression is affected by the size of the modeling material to support the form, etc. For the modeling material having a large size, 2.0 kPa or greater is preferable in terms of supporting the form.

The compression stress at 1 percent compression can be measured by a universal tester (AG-I, load cell: 1 kN, compression jig for 1 kN) manufactured by Shimadzu Corporation).

The ultraviolet ray irradiator has no particular limit and can be suitably selected to suit to a particular application. For example, AG-I, manufactured by Shimadzu Corporation, can be used for measurement.

In the irradiation amount of 500 mJ/cm$^2$, the illuminance and the irradiation time are respectively preferably 100 W/cm$^2$ and 5 seconds.

Monomer A Having Hydrogen Bond Power

The monomer A having a hydrogen bond power has no specific limit and can be suitably selected to suit to a particular application. For example, mono-functional monomers and multi-functional monomers are suitable. These can be used alone or in combination. Of these, in order to improve water decaying property of a cured article, mono-functional monomers are preferable.

As the monomer A having a hydrogen bond power, for example, monomers having an amide group, an amino group, a hydroxyl group, a tetramethyl ammonium group, a silanol group, an epoxy group, a sulfo group, etc. are suitable.

Specific examples of the polymerization reaction of the monomer A having a hydrogen bond power include, but are not limited to, radical polymerization, ion polymerization, coordination polymerization, and ring-opening polymerization. Of these, in order to control polymerization reaction, radical polymerization is preferable. For this reason, as the monomer A having a hydrogen bond power, ethylenic unsaturated monomers are preferable, and water-soluble mono-functional ethylenic unsaturated monomers and water-soluble multi-functional ethylenic unsaturated monomers are more preferable. Of these, water-soluble mono-functional ethylenic unsaturated monomers are particularly preferable in terms of enhancement of water-decaying property of a cured article.

Water-soluble Mono-functional Ethylenic Unsaturated Monomer Having Hydrogen Bond Power

As the water-soluble mono-functional ethylenic unsaturated monomer having a hydrogen bond power, for example, monomers including a mono-functional vinylamide group (N-vinyl-ε-caprolactam, N-vinylformamide, N-vinylpyrrolidone, etc.), (meth)acrylates including a mono-functional hydroxyl group (hydroxyethyl(meth)acrylate, hydroxypropyl(meth)acrylate, 4-hydroxybutyl(meth)acrylate, etc.), (meth)acrylate including a hydroxy group (polyethyleneglycol mono(meth)acrylate, monoalkoxy(C1-C4)polyethyleneglycol mono(meth)acrylate, polypropyleneglycol mono(meth)acrylate, monoalkoxy(C1-C14)polypropylene glycol mono(meth)acrylate, and mono(meth)acrylate of PEG-PPG block polymer), and (meth)acrylamide derivatives {(meth)acrylamide, N-methyl(meth)acrylamide, N-ethyl(meth)acrylamide, N-propyl(meth)acrylamide, N-butyl(meth)acrylamide, N,N'-dimethyl(meth)acrylamide, N-hydroxyethyl(meth)acrylamide, N-hydroxypropyl(meth)acrylamide, N-hydroxybutyl(meth)acrylamide, etc.}, and (meth)acryloyl morphorine are preferable. These can be used alone or in combination. Of these, in terms of optical reactivity, (meth)acylate and (meth)acrylamide derivatives are preferable and hydroxyethylacrylate, hydroxypropylacrylate, 4-hydroxybutylacrylate, acrylamide, acryloyl morphorine, N-methylacrylamide, N-ethylacrylamide, N-propylacrylamide, N-butylacrylamide, N,N'-dimethylacrylamide, N-hydroxyethylacrylamide, N-hydroxypropylacrylamide, N-hydroxybutylacrylamide, and diethylacrylamide are more preferable. In terms of low dermal irritancy, acryloyl morphorine (molecular weight: 141.17) and N-hydroxyethylacrylamide (molecular weight: 115.15) are particularly preferable.

Water-soluble Multi-functional Ethylenic Unsaturated Monomer Having Hydrogen Bond Power

Specific examples include, but are not limited to, as difunctional monomers, tripropyleneglycol di(meth)acrylate, triethyleneglycol di(meth)acrylate, tetraethyleneglycol di(meth)acrylate, polypropyleneglycol di(meth)acrylate, neopentyl glycol hydroxy pivalic acid ester di(meth)acrylate (MANDA), hydroxypivalic acid neopentyl glycol ester di(meth)acrylate (HPNDA), 1,3-butanediol di(meth)acrylate (BGDA), 1,4-butanediol di(meth)acrylate (BUDA), 1,6-hexanediol di(meth)acrylate (HDDA), 1,9-nonane diol(meth)acrylate, diethylene glycol di(meth)acrylate (DEGDA), neopentyl glycol di(meth)acrylate (NPGDA), tripropyleneglycol di(meth)acrylate (TPGDA), caprolactone-modified hydroxy pivalic acid neopentyl glycol ester di(meth)acrylate, propoxinated neopentyl glycol di(meth)acrylate, polyethylene glycol 400 di(meth)acrylate, polyethylene glycol 200 di(meth)acrylate, and polyethylene glycol 400 di(meth)acrylate and as tri- or more functional monomers, triarylisocyanate and tris(2-hydroxyethyl)isocyanulate tri(meth)acrylate. These can be used alone or in combination.

The molecular weight of the monomer A having a hydrogen bond power is preferably from 70 to 2,000 and more preferably from 100 to 500. When the molecular weight is from 70 to 2,000, viscosity can be adjusted to be optimal for liquid discharging methods.

The proportion of the monomer A having a hydrogen bond power is preferably from 30 to 60 percent by mass to the total content of the form supporting liquid. When the proportion is from 30 to 60 percent by mass, the supporting material for supporting the form strikes a balance between compression stress and water decaying property.

Solvent B Having Hydrogen Bond Power

The solvent B having a hydrogen bond power has a hydrogen bond power with the monomer A having a hydrogen bond power and forms a hydrogen bond with the monomer A having a hydrogen bond power to demonstrate the feature of the supporting material for supporting the form.

The solvent B is at least one member selected from the group consisting of a diol having 3 to 6 carbon atoms, a carboxylic acid compound, an amine compound, an ester compound, a ketone compound, and a urea compound. Of these, diol having 3 to 6 carbon atoms is preferable.

Diol Having 3 to 6 Carbon Atoms

It is preferable that diol having 3 to 6 carbon atoms have flowability at room temperature, be soluble in water, have no reactivity with a water-soluble acrylic monomer, and do not inhibit radical polymerization reaction during photocuring.

In addition, diol having 3 to 6 carbon atoms includes both mono-functional and multi-functional.

Specific examples of the diol having 3 to 6 carbon atoms include, but are not limited to, propane diol, butane diol, pentane diol, and hexanediol. These can be used alone or in combination. Of these, 1,3-prpanediol, 1,4-butanediol, 1,5-pentanediol, and 1,6-hexanediol are preferable.

The number of carbon atoms is preferably from 3 to 6 and more preferably from 3 to 5. When the number of carbon atoms is 3 or more, the compression stress at 1 percent compression can be improved. When the number of carbon atoms is 6 or less, viscosity of the form supporting liquid lowers.

The carbon chain of the diol having 3 to 6 carbon atoms may be straight or branched.

Carboxylic Acid Compound

Specific examples of the carboxylic acid compound include, but are not limited to, straight-chained aliphatic acids such as formic acid, acetic acid, propionic acid, butaric acid, pentanoic acid, and hexanoic acid, various branch-chained aliphatic carboxylic acids such as isobutyric acid, t-butyric acid, isopentyric acid, isooctyric acid, and 2-ethylhexyric acid, aromatic carboxylic acids such as benzoic acid and benzene sulfonic acid, and hydroxy carboxylic acid such as glycolic acid and lactic acid. These can be used alone or in combination. Of these, in terms of solubility in water, acetic acid, propionic acid, butyric acid, and lactic acid are preferable. More preferable are butyric acid and lactic acid.

Amine Compound

Specific examples of the amine compound include, but are not limited to, primary to tertiary amines such as monoalkyl amine, dialkylamine, and trialkylamine, divalent amines such as ethylene diamine, trivalent amines such as triethylene diamine, and aliphatic amines such as pyridine and aniline. These can be used alone or in combination. Of these, in terms of cross-linking strength due to hydrogen bond and solubility in water, divalent or trivalent primary amines are preferable. More preferable is ethylene diamine.

Ester Compound

Specific examples of the ester compound include, but are not limited to, mono-functional esters such as ethyl acetate, butyl acetate, and ethyl propionate, polyfunctional aliphatic esters such as dimethyl succinate and dimethyl adipate, and polyfunctional aromatic esters such as dimethyl terephthalate. These can be used alone or in combination. Of these, in terms of solubility in water, evaporation and smell during fabrication, and safety, dimethyl adipate is preferable.

Ketone Compound

Specific examples of the ketone compound include, but are not limited to, monofunctional ketones such as acetone and methylethyl ketone and multifunctional ketones such as acetylacetone and 2,4,6-heptatrione.

These can be used alone or in combination. Of these, in terms of volatility and solubility in water, acetyl acetone is preferable.

The proportion of the monomer B having a hydrogen bond power is preferably from 10 to 50 percent by mass to the total content of the form supporting liquid. When the proportion is from 10 to 50 percent by mass, the supporting material for supporting the form strikes a balance between compression stress and water decaying property.

Mass Ratio A/B

The mass ratio (A/B) of the content (percent by mass) of A to the content (percent by mass) of B is preferably from 0.3 to 2.5 and more preferably from 0.5 to 2.5. When the mass ratio (A/B) is from 0.3 to 2.5, compression stress at 1 percent compression can be improved.

Polymerization Initiator C

As the polymerization initiator C, any material can be used which produces a radical upon irradiation of light (ultraviolet rays having a wavelength range of from 220 to 400 nm).

Specific examples of the polymerization initiator C include, but are not limited to, acetophenone, 2,2-diethoxyacetophenone, p-dimethylaminoacetone, benzophenone, 2-chlorobenzophenone, p,p'-dichlorobenzophenone, p,p-bisdiethylamonobenzophenoen, Michler's Ketone, benzyl, benzoin, benzoin methylether, benzoin ethylether, benzoin isopropylether, benzoin-n-propylether, benzoin isobutylether, benzoin-n-butylether, benzylmethyl ketal, thioxanthone, 2-chlorothioxanthone, 2-hydroxy-2-methyl-1-phenyl-1-one, 1-(4-isopropylphenyl)-2-hydroxy-2-methylpropane-1-one, methylbenzoyl formate, 1-hydroxy cyclohexyl phenylketone, azobisisobutylo nitrile, benzoylperoxide, and di-tert-butylperoxide. These can be used alone or in combination. It is preferable to select a polymerization initiator in accordance with the ultraviolet ray wavelength of an ultraviolet ray irradiator.

The proportion of the polymerization initiator C is preferably from 0.5 to 10 percent by mass to the total content of the liquidized supporting material (form supporting liquid).

Ultraviolet Ray Irradiator

The ultraviolet ray irradiator includes, for example, a high pressure mercury lamp, an ultra high pressure mercury lamp, and a metal halide lamp.

The ultra-high pressure mercury lamp is a point light source but if the DeepUV type combined with an optical system to have a high level of light use efficiency is used, the lamp is capable of emitting light in a short-wavelength range.

Since the metal halide has a wide range of wavelength, it is suitable for colored materials. Halogenated materials of metal such as Pb, Sn, and Fe are used and can be selected to suit to absorption spectrum of a polymerization initiator. The lamp for use in curing has no particular limit and can be suitably selected to suit to a particular application. Lamps available on the market such as H lamp, D lamp, or V lamp (manufactured by Fusion System) can be used.

There is no specific limitation to the surface tension of the liquidized supporting material (form supporting liquid) and it can be selected to suit to a particular application. For example, the surface tension is preferably from 20 to 45 mN/m and more preferably from 25 to 34 mN/m. When the surface tension is 20 mN/m or greater, it is possible to prevent unstable jetting (deviation of jetting direction, no jetting, etc.) during fabrication is improved. When the surface tension is 45 mN/m or less, a discharging nozzle for fabrication (shape-forming) is easily filled with liquid.

Surface tension can be measured by a surface tensiometer (automatic contact angle DM-701, manufactured by Kyowa Interface Science Co., LTD.), etc.

Viscosity

The viscosity of the liquidized supporting material (form supporting liquid) at 25 degrees C is 100 mPa•s or less, preferably 3 to 70 mPa•s, and more preferably from 6 to 50 mPa·s. When the viscosity is 100 mPa·s or less, discharging stability can be enhanced.

Viscosity can be measured by, for example, a rotation viscometer (VISCOMATE VM-150 III, manufactured by TOKI SANGYO CO., LTD.) in a 25 degrees C environment.

Viscosity Change Rate

The viscosity change rate of the liquid supporting material is preferably from -20 to +20 percent and more preferably from -10 to +10 percent when the liquidized supporting material is left undone at 50 degrees C for two weeks. When the viscosity change rate is from -20 to +20 percent, storage stability is good and discharging is stabilized.

The viscosity change rate between the viscosity before storage and the viscosity after the liquid is left undone for two weeks at 50 degrees C can be measured in the following manner.

The form supporting liquid is placed in a polypropylene bottle (50 mL) and left undone for two weeks in a constant temperature tank at 50 degrees C. The liquid is taken out from the tank and left undone until the temperature thereof lowers to room temperature (25 degrees C). Thereafter, viscosity is measured. The viscosity before placing the form supporting liquid in the constant temperature tank is determined as pre-storage viscosity and the viscosity thereof taken out from the constant temperature tank is determined as post-storage viscosity. The viscosity change rate is calculated according to the following relation. The pre-storage viscosity and the post-storage viscosity can be measured by, for example, an R type viscometer (manufactured by TOKI SANGYO CO., LTD.) at 25 degree C.

$$\text{Viscosity change rate (percent)} = \{[(\text{post-storage viscosity}) - (\text{pre-storage viscosity})] / (\text{pre-storage viscosity})\} \times 100$$

Other Components

The other optional components have no particular limit and can be suitably selected to suit to a particular application. For example, minerals dispersible in solvents, polymerization inhibitors, and form supporting liquid, polymerizable monomers other than the A component, thermal polymerization initiators, colorants, antioxidants, chain transfer agents, anti-aging agents, cross-linking promoters, ultraviolet absorbents, plasticizers, preservatives, and dispersants.

Solvent

Specific examples of the solvent include, but are not limited to, alcohols, triol, ether compounds, triethylene glycol, and polypropylene glycol. These can be used alone or in combination.

The solubility parameter (SP) of the solvent is preferably 18 MPa$^{1/2}$ or greater and more preferably 23 MPa$^{1/2}$ or greater in terms of water decaying property.

The proportion of the solvent is preferably 50 percent by mass or less and more preferably 30 percent by mass or less.

Polymerization Inhibitor

Specific examples of the polymerization inhibitor include, but are not limited to, phenol compounds (hydroquinone, hidroquinone monomethylether, 2,6-di-t-butyl-p-cresol, 2,2-methylene-bis-(4-methyl-6-t-butylphenol), 1,1,3-tris-(2-methyl-4-hydroxy-5-t-butylphenyl)butane, etc.), sulfur compounds (dilaurylthio dipropionate, etc.), phosphorus compounds (triphenyl phosphite, etc.), and amine compounds (phenothiadine, etc.). These can be used alone or in combination.

The proportion of the polymerization inhibitor is 30 percent by mass or less and preferably 20 percent by mass or less to the total content of the form supporting liquid in terms of compression stress.

Mineral Dispersible in Form Supporting Liquid

The mineral dispersible in the form supporting liquid has no specific limit and can be suitably selected to suit to a particular application. For example, lamellar clay mineral is suitable.

Specific examples of the lamellar clay mineral include, but are not limited to, smectite such as montmorillonite, beidellite, hectorite, saponite, nontronite, or stevensite, vermiculite, bentonite, and lamellar sodium silicate such as kanemite, kenyaite and makatite. These can be used alone or in combination.

Such lamellar clay mineral may be either a naturally produced mineral or a mineral manufactured by chemical synthesis.

The surface of the lamellar clay mineral can be subject to organic treatment.

The lamellar inorganic substance of the lamellar clay mineral is treated with an organic cationic compound so that the cations between layers can be ion-exchanged with cation groups of quaternary salts, etc.

Specific example of the cation of the lamellar clay mineral include, but are not limited to, metal cations such as sodium ion and calcium ion.

The lamellar clay mineral treated with the organic cationic compound is swollen or dispersed in the polymer and the polymerizable monomer mentioned above.

A specific example of the lamellar clay mineral treated with the organic cationic compound is Lucentite series (manufactured by Katakura & Co-op Agri Corporation). Examples of Lucentite series are Lucentite SPN, Lucentite SAN, Lucentite SEN, and Lucentite STN. These can be used alone or in combination.

Polymerizable Monomer

The polymerizable monomer has no specific limit and is suitably selected to suit to a particular application. For example, (meth)acrylate is usable.

Specific examples of the (meth)acrylates include, but are not limited to, 2-ethylhexyl(meth)acrylate (EHA), isobonyl(meth)acrylate, 3-methoxybutyl(meth)acrylate, lauryl(meth)acrylate, 2-phenoxyethyl(meth)acrylate, isodecyl(meth)acrylate, isooctyl(meth)acrylate, tridecyl(meth)acrylate, caprolactone(meth)acrylate, and ethoxyfied nonylphenol(meth)acrylate. These can be used alone or in combination.

Thermal Polymerization Initiator

The thermal polymerization initiator has no particular limitation and can be suitably selected to suit to a particular application. Examples thereof are azo-based initiators, peroxide initiators, persulfate initiators, and redox (oxidation-reduction) initiators. In terms of storage stability, photopolymerization initiators are preferable to thermal polymerization initiators.

Specific example of the azo-based initiator include, but are not limited to, VA-044, VA-46B, VA-50, VA-057, VA-061, VA-067, VA-086, 2,2'-azobis(4-methoxy-2,4-dimethylvaleronitrile)(VAZO 33), 2,2'-azobis(2-amidinopropane)dihydrochloride (VAZO 50), 2,2'-azobis(2,4-dimetaylvaleronitrile) (VAZO 52), 2,2'-azobis(isobutylonitrile) (VAZO 64), 2,2'-azobis-2-methylbutylonitrile) (VAZO 67), and 1,1-azobis(1-cyclohexane carbonitrile) (VAZO 88) (all available from E. I. du Pont de Nemours and Company), 2,2'-azobis(2-cyclopropylpropionitrile), and 2,2'-azo-bis(methylisobutylate) (V-601) (all available from Wako Pure Chemical Industries, Ltd.).

Specific examples of the peroxide initiator include, but are not limited to, benzoyl peroxide, acetyl peroxide, lauroyl peroxide, decanoyl peroxide, dicetyl peroxy dicarbonate, di(4-t-butylcyclohexyl)peroxy dicarbonate (Perkadox 16S) (available from Akzo Nobel), di(2-ethylhexyl)peroxy dicarbonate, t-butyl peroxypivalate (Lupersol 11) (all available from Elf Atochem), t-butylperoxy-2-ethyl hexanoate (Trigonox 21-C50) (available from Akzo Nobel), and dicumyl peroxide.

Specific examples of the persulfate initiator include, but are not limited to, potassium persulfate, sodium persulfate, and ammonium persulfate.

Specific examples of redox (oxidation-reduction) initiator include, but are not limited to, a combination of the persulfate initiator and a reducing agent such as sodium metabisulfite and sodium hydrogen sulfite, a system based on the organic peroxide and tertiary amine (such as a system based on benzoyl peroxide and dimethylaniline), and a system based on organic hydroperoxide and transition metal (such as a system based on cumenhydroperoxide and cobalt naftate).

Colorant

Examples of the colorant are pigments and dyes.

Examples of the pigment are organic pigments and inorganic pigments.

Specific examples of the organic pigments include, but are not limited to, azo pigments, polycyclic pigments, adine pigments, daylight fluorescent pigments, nitro pigments, nitroso pigments, and natural pigments.

Examples of the inorganic pigment are metal oxides (iron oxide, chromium oxide, and titanium oxide) and carbon black.

Anti-oxidant

Specific examples of the antioxidant include, but are not limited to, phenol compounds (monocyclic phenol (2,6-di-t-butyl-p-cresol, etc.), bisphenol (2,2'-methylene-bis-(4-methyl-6-t-butylphenol, etc.), polycyclic phenol (1,3,5-trimethyl-2,4,6-tris(3,5-di-t-buthyl-hydroxybenzyl) (benzene), etc.), sulfur compounds (dilauryl 3,3'-thio dipropionate, etc.), phosphorus compounds (triphenyl phosphite, etc.), and amine compounds (octylated diphenylamine, etc.).

Chain Transfer Agent

Specific examples of the chain transfer agent include, but are not limited to, hydrocarbon [(compound having 6 to 24 carbon atoms such as aromatic hydrocarbon (toluene, xylene, etc.)], unsaturated aliphatic hydrocarbon (1-butene, 1-nonene, etc.), halogenized hydrocarbon compounds having 1 to 24 carbon atoms such as dichloromethane and carbon tetrachloride), alcohol (compounds having 1 to 24 carbon atoms such as methanol and 1-butanol), thiol (compounds having 1 to 24 carbon atoms such as such as ethylthiol and 1-octylthiol), ketone (compounds having 3 to 24 carbon atoms such as acetone and methylethyl ketone), aldehyde (compounds having 2 to 18 carbon atoms such as 2-methyl-2-propylaldehyde and 1-pentylaldehyde), phenol (compounds having 6 to 36 carbon atoms such as phenol, m-cresol, p-cresol, and o-cresol), quinone (compounds having 6 to 24 carbon atoms such as hydroquinone), amine (compounds having 3 to 24 carbon atoms such as diethylmethylamine and diphenylamine), disulfide (compounds having 2 to 24 carbon atoms such as diethyldisulfide and di-1-t-octyldisulfide).

Supporting Power of Supporting Material after Curing

The supporting power of the liquidized supporting material (form supporting liquid) after curing, also referred to as supporting power of supporting material, is ability of the supporting material to support the modeling material and can be represented in compression stress at 1 percent compression.

As the supporting power of the supporting material, the compression stress at 1 percent compression at 25 degrees C is preferably 0.5 kPa or greater and more preferably 2 kPa or greater in terms of fabrication accuracy of a photofabrication object and solubility of the supporting material.

In order to adjust the compression stress at 1 percent compression of the supporting material in the range specified above, the kind and the amount of the compositions of A and B constituting the supporting material are suitably selected. The compression stress at 1 percent compression can be measured by, for example, a universal tester (AG-I, manufactured by Shimadzu Corporation).

High supporting power of the supporting material is considered to be secured by hydrogen bond of the composition B with the polymer in which the composition A is polymerized.

Removability of Supporting Material

As described above, the supporting power of the supporting material is ascribable to the hydrogen bond. For this reason, the supporting power of the supporting material is weakened by dipping in water so that the supporting material collapses and can be removed. When the B has a low molecular weight, it rapidly diffuses and can be removed in a short time.

Solution

For example, the solution mentioned above has hydrogen bond power.

Specific examples include, but are not limited to, water, alcohols such as butanol and hexanol, amines such as hexylamine and pentylamine, and aromatic compounds such as benzene and toluene. These can be used alone or in combination. Of these, water and alcohol are preferable in terms of safety.

In addition, the solution may include an additive.

Examples of the additive are surfactants. Such a surfactant can boost affinity to straight alkyl chains by selection of the surfactant and adjustment of the amount thereof.

The temperature of the solution is preferably 40 degrees C or higher to soften the supporting material and permeate into the inside. Also, to prevent warp of a solid freeform fabrication object, it is possible to select temperatures lower than 40 degrees C.

It is preferable that the device for manufacturing a solid freeform fabrication object have no heater and can fabricate an object at room temperature.

Having generally described preferred embodiments of this disclosure, further understanding can be obtained by reference to certain specific examples which are provided herein for the purpose of illustration only and are not intended to be limiting. In the descriptions in the following examples, the numbers represent weight ratios in parts, unless otherwise specified.

EXAMPLES

Example

Next, the supporting material is concretely described referring to Examples but the supporting material for use in the present disclosure is not limited thereto.

Viscosity was measured as follows:

Viscosity

Viscosity was measured by a rotation viscometer (VISCOMATE VM-150 III, manufactured by TOKI SANGYO CO., LTD.) in a 25 degrees C environment.

Example 1

The following recipe was mixed and stirred to obtain a form supporting liquid of Example 1 (liquidized supporting material).

|  |  |
|---|---|
| • Acryloylmorpholine (manufactured by KJ Chemicals Corporation): | 50.0 parts |
| • 1,3-propane diol (manufactured by Tokyo Chemical Industry Co. Ltd.): | 50.0 parts |
| • 1-hydroxycyclohexyl phenylketone (IRGACURE® 184, manufactured by BASF): | 3.0 parts |
| • Phenothiadine (manufactured by Tokyo Chemical Industry Co. Ltd.): | 0.1 parts |

Examples 2 to 15

Form supporting liquids of Examples 2 to 15 were obtained in the same manner as in Example 1 except that the compositions were changed to those shown in Tables 1 to 3.

Next, using each obtained form supporting liquid, cured matter (supporting material) was formed in the following manner to evaluate removability (water-decaying property) of supporting material and supporting power (compression stress at 1 percent compression) of the supporting material. The results are shown in Tables 1 to 3.

Manufacturing of Cured Matter

The form supporting liquid was poured into a silicone rubber mold having a dimension of 20 mm × 20 mm × 5 mm and irradiated by an ultraviolet ray irradiator (SubZero-LED, manufactured by Integration Technology Japan) with ultraviolet rays in an irradiation amount of 500 mJ/cm$^2$ (illuminance: 100 mW/cm$^2$, irradiation time: 5 seconds) to obtain 2 g of cured matter of supporting material having a dimension of 20 mm × 20 mm × 5 mm.

Removability of Supporting Material (Water-decaying Property)

The thus-obtained supporting material having a dimension of 20 mm × 20 mm × 5 mm was placed in 20 g of lukewarm water at 25 degrees C and left still for one hour. Thereafter, the silicone rubber mold was taken out, and the supporting material was visually observed to evaluate removability (water-decaying property) of the supporting material based on the following evaluation criteria. The volume of the remaining solid object was measured by Archimedes' Law.

Evaluation Criteria

A: Supporting material remaining: less than 30 percent by volume

B: Supporting material remaining: from 30 to 500 percent by volume

C: Supporting material remaining: greater than 50 percent by volume

Supporting Power (Compression Stress at 1 Percent Compression) of Supporting Material

The supporting material fabricated to have a form of 20 mm × 20 mm × 5 mm was set in a universal tester (AG-I, manufactured by Shimadzu Corporation) with a load cell of 1 kN and a compression jig for 1 kN at 25 degrees C, and a computer recorded the compression stress applied to the load cell and plotted the stress to the amount of displacement to measure the compression stress at 1 percent compression. The compression stress at 1 percent compression practically allowable was 0.3 or greater.

Table 1

| | | | Examples | | |
|---|---|---|---|---|---|
| | | | 1 | 2 | 3 |
| A: Monomer having hydrogen bond power | Acryloyl morpholine | | 50.0 | 50.0 | 50.0 |
| | N-hydroxyethylacrylamide | | - | - | - |
| B: Solvent having hydrogen bond power | Diol having 3 to 6 carbon atoms | 1,3-propane diol | 50.0 | - | - |
| | | 1,4-butane diol | - | 50.0 | - |
| | | 1,5-pentane diol | - | - | 50.0 |
| | | 1,6-hexane diol | - | - | - |
| | Carboxylic acid compound | butanoic acid | - | - | - |
| | | L-lactic acid | - | - | - |
| | Amine compound | Methylamine | - | - | - |
| | Ester compound | Dimethyl adipiate | - | - | - |
| | Ketone compound | Acetylacetone | - | - | - |
| | Urea compound | Trimethyl urea | - | - | - |
| Solvent | 1-dodecanol | | - | - | - |
| | 1,2-ethane diol | | - | - | - |
| | 1,7-heptane diol | | - | - | - |
| | 1,3,5-triol-3-methyl pentane | | - | - | - |
| | Polypropylene glycol (diol type, 400) | | - | - | - |
| | Deionized water | | - | - | - |
| C: polymerization initiator | 1-hydroxy cyclohexyl phenyl ketone | | 3.0 | 3.0 | 3.0 |
| Polymerization inhibitor | Phenothiadine | | 0.1 | 0.1 | 0.1 |
| Mass ratio (A/B) | | | 1.0 | 1.0 | 1.0 |
| Viscosity at 25 degrees C (mPA·s) | | | 23.0 | 28.0 | 30.0 |
| Evaluation result | Removability of supporting member (water decaying property) | | A | A | A |
| | Supporting power of supporting member (compression stress at 1 percent compression) | | 8.0 | 70.0 | 100.0 |

| | | | Examples | | |
|---|---|---|---|---|---|
| | | | 4 | 5 | 6 |
| A: Monomer having hydrogen bond power | Acryloyl morpholine | | 50.0 | 50.0 | 30.0 |
| | N - hydroxyethylacrylamide | | - | - | - |

(continued)

| | | | Examples | | |
|---|---|---|---|---|---|
| | | | 4 | 5 | 6 |
| B: Solvent having hydrogen bond power | Diol having 3 to 6 carbon atoms | 1,3-propane diol | - | - | - |
| | | 1,4-butane diol | - | - | - |
| | | 1,5-pentane diol | 25.0 | - | 70.0 |
| | | 1,6-hexane diol | 25.0 | 40.0 | - |
| | Carboxylic acid compound | butanoic acid | - | - | - |
| | | L-lactic acid | - | - | - |
| | Amine compound | Methylamine | - | - | - |
| | Ester compound | Dimethyl adipiate | - | - | - |
| | Ketone compound | Acetylacetone | - | - | - |
| | Urea compound | Trimethyl urea | - | - | - |
| Solvent | 1-dodecanol | | | - | - |
| | 1,2-ethane diol | | | - | - |
| | 1,7-heptane diol | | | - | - |
| | 1,35-triol-3-methyl pentane | | | - | - |
| | Polypropylene glycol (diol type, 400) | | | - | - |
| | Deionized water | | | - | - |
| C: polymerization initiator... | 1-hydroxy cyclohexyl phenyl ketone | | 3.0 | 3.0 | 3.0 |
| Polymerization inhibitor | Phenothiadine | | 0.1 | 0.8 | 0.1 |
| Mass ratio (A/B) | | | 1.00 | 1.50 | 0.43 |
| Viscosity at 25 degrees C (mPA·s) | | | 50.0 | 80.0 | 24.0 |
| Evaluation result | Removability of supporting member (water decaying property) | | B | B | A |
| | Supporting power of supporting member (compression stress at 1 percent compression) | | >100.0 | 40.0 | 20.0 |

Table 2

| | | Examples | | |
|---|---|---|---|---|
| | | 7 | 8 | 9 |
| A: Monomer having hydrogen bond power | Acryloyl morpholine | 25.0 | 40.0 | 55.0 |
| | N-hydroxyethylacrylamide | 25.0 | - | - |

(continued)

|  |  |  | Examples | | |
| --- | --- | --- | --- | --- | --- |
|  |  |  | 7 | 8 | 9 |
| B: Solvent having hydrogen bond power | Diol having 3 to 6 carbon atoms | 1,3-propane diol |  | - | - |
|  |  | 1,4-butane diol |  | - | - |
|  |  | 1,5-pentane diol | 50.0 | 30.0 | - |
|  |  | 1,6-hexane diol | - | - | - |
|  | Carboxylic acid compound | butanoic acid | - | - | - |
|  |  | L-lactic acid | - | - | - |
|  | Amine compound | Methylamine | - | - | - |
|  | Ester compound | Dimethyl adipiate | - | - | 22.0 |
|  | Ketone compound | Acetylacetone | - | - | - |
|  | Urea compound | Trimethyl urea | - | - | - |
| Solvent | 1-dodecanol | | - | - | - |
|  | 1,2-ethane diol | | - | - | - |
|  | 1,7-heptane diol | | - | - | - |
|  | 1,35-triol-3-methyl pentane | | - | - | - |
|  | Polypropylene glycol (diol type, 400) | | - | 30.0 | 23.0 |
|  | Deionized water | | - | - | - |
| C: polymerization initiator | 1-hydroxy cyclohexyl phenyl ketone | | 3.0 | 3.0 | 5.0 |
| Polymerization inhibitor | Phenothiadine | | 0.1 | 0.1 | 0.1 |
| Mass ratio (A/B) | | | 1.0 | 1.33 | 2.50 |
| Viscosity at 25 degrees C (mPA·s) | | | 70.0 | 50.0 | 70.0 |
| Evaluation result | Removability of supporting member (water decaying property) | | A | A | B |
|  | Supporting power of supporting member (compression stress at 1 percent compression) | | 1.0 | 100.0 | >100.0 |

|  |  | Examples | | |
| --- | --- | --- | --- | --- |
|  |  | 10 | 11 | 12 |
| A: Monomer having hydrogen bond power | Acryloyl morpholine | 20.0 | 55.0 | 50.0 |
|  | N-hydroxyethylacrylamide | - | - | - |

(continued)

|  |  |  | Examples | | |
|---|---|---|---|---|---|
|  |  |  | 10 | 11 | 12 |
| B: Solvent having hydrogen bond power | Diol having 3 to 6 carbon atoms | 1,3-propane diol |  | - | - |
|  |  | 1,4-butane diol |  | - | - |
|  |  | 1,5-pentane diol | - | - | - |
|  |  | 1,6-hexane diol | - | - | - |
|  | Carboxylic acid compound | butanoic acid | - | - | - |
|  |  | L-lactic acid | - | - | 30.0 |
|  | Amine compound | Methylamine | - | - | - |
|  | Ester compound | Dimethyl adipiate | - | - | - |
|  | Ketone compound | Acetylacetone | 60.0 | - | - |
|  | Urea compound | Trimethyl urea | - | 5.0 | - |
| Solvent | 1-dodecanol | | - | - | - |
|  | 1,2-ethane diol | | - | - | - |
|  | 1,7-heptane diol | | - | - | - |
|  | 1,35-triol-3-methyl pentane | | - | - | - |
|  | Polypropylene glycol (diol type, 400) | | 20.0 | 40.0 | 20.0 |
|  | Deionized water | | - | - | - |
| C: polymerization initiator | 1-hydroxy cyclohexyl phenyl ketone | | 5.0 | 5.0 | 5.0 |
| Polymerization inhibitor | Phenothiadine | | 0.1 | 0.1 | 0.1 |
| Mass ratio (A/B) | | | 0.33 | 11.00 | 1.67 |
| Viscosity at 25 degrees C (mPA·s) | | | 70.0 | 100.0 | 80.0 |
| Evaluation result | Removability of supporting member (water decaying property) | | A | B | A |
|  | Supporting power of supporting member (compression stress at 1 percent compression) | | 2.0 | >100.0 | >100.0 |

Table 3

|  |  | Examples | | |
|---|---|---|---|---|
|  |  | 13 | 14 | 15 |
| A: Monomer having hydrogen bond power | Acryloyl morpholine | - | 20.0 | 68.0 |
|  | N-hydroxyethylacrylamide | 50.0 | - | - |

(continued)

| | | | Examples | | |
|---|---|---|---|---|---|
| | | | 13 | 14 | 15 |
| B: Solvent having hydrogen bond power | Diol having 3 to 6 carbon atoms | 1,3-propane diol | | - | - |
| | | 1,4-butane diol | | - | - |
| | | 1,5-pentane diol | - | - | - |
| | | 1,6-hexane diol | - | - | - |
| | Carboxylic acid compound | butanoic acid | 20.0 | 50.0 | - |
| | | L-lactic acid | - | - | - |
| | Amine compound | Methylamine | 20.0 | - | 25.0 |
| | Ester compound | Dimethyl adipiate | - | - | - |
| | Ketone compound | Acetylacetone | - | - | - |
| | Urea compound | Trimethyl urea | - | - | - |
| Solvent | | 1-dodecanol | - | - | - |
| | | 1,2-ethane diol | - | - | - |
| | | 1,7-heptane diol | - | - | - |
| | | 1,35-triol-3-methyl pentane | - | - | - |
| | | Polypropylene glycol (diol type, 400) | 10.0 | 30.0 | 7.0 |
| | | Deionized water | - | - | - |
| C: polymerization initiator | | 1-hydroxy cyclohexyl phenyl ketone | 5.0 | 5.0 | 5.0 |
| Polymerization inhibitor | | phenothiadine | 0.1 | 0.1 | 0.1 |
| Mass ratio (A/B) | | | 1.25 | 0.40 | 2.72 |
| Viscosity at 25 degrees C (mPA·S | | | 50.0 | 70.0 | 20.0 |
| Evaluation result | | Removability of supporting member (water decaying property) | B | A | B |
| | | Supporting power of supporting member (compression stress at 1 percent compression) | 0.50 | 1.0 | >100.0 |

According to the present disclosure, quality of fabrication is improved while reducing degradation of the surface property of a solid freeform fabrication object.

**Claims**

1.  A method of fabricating a solid freeform fabrication object (17), comprising:

discharging multiple liquid droplets of modeling material (301) and multiple liquid droplets of supporting material (302) to a stage (14) by a discharging device (11;12);
merging the multiple liquid droplets of the modeling material (301) into a liquid droplet of the modeling material (301) in the air and the multiple liquid droplets of the supporting material (302) into a liquid droplet of the supporting material (302) in the air;
curing the liquid droplet of the modeling material (301) and the liquid droplet of the supporting material (302) on the stage (14) to form a layered fabrication object (30); and
repeating the discharging and the curing to laminate the layered fabrication object (30) to manufacture the solid freeform fabrication object (17),
wherein the discharging device (11;12) stands still during at least the discharging to a boundary area of the modeling material (301) and the supporting material (302) on the stage (14).

2. The method according to claim 1, wherein the stage (14) is moved against the discharging device (11;12) standing still during the discharging.

3. The method according to claim 1, wherein the discharging device (11;12) moves against the stage (14) standing still during the discharging.

4. The method according to any one of claims 1 to 3, wherein the number of the multiple liquid droplets of modeling material (301) and the number of the multiple liquid droplets of supporting material (302) are two or three.

5. The method according to any one of claims 1 to 4, wherein the supporting material (302) is water-soluble.

6. A method of fabricating a solid freeform fabrication object (17), comprising:

discharging multiple liquid droplets of modeling material (301) and multiple liquid droplets of supporting material (302) to a stage (14) standing still by a discharging device (11;12);
merging the multiple liquid droplets of the modeling material (301) into a liquid droplet of the modeling material (301) and the multiple liquid droplets of the supporting material (302) into a liquid droplet of the supporting material (302) in the air;
curing the liquid droplet of the modeling material (301) and the liquid droplet of the supporting material (302) on the stage (14) to form a layered fabrication object (30); and
repeating the discharging and the curing to laminate the layered fabrication object (30) to manufacture the solid freeform fabrication object (17),
wherein the discharging device (11;12) moves against the stage (14) during the discharging and the discharging device (11;12) reduces speed of moving during the discharging to a boundary area of the modeling material and the supporting material on the stage (14).

7. The method according to claim 6, wherein the number of the multiple liquid droplets of modeling material (301) and the number of the multiple liquid droplets of supporting material (302) are two or three.

8. The method according to claim 6 or 7, wherein the supporting material (302) is water-soluble.

9. A device (10) for fabricating a solid freeform fabrication object (17), comprising:

a control unit (500) configured to control the device (10);
a stage (14);
a discharging device (11;12) configured to discharge multiple liquid droplets of modeling material (301) and multiple liquid droplets of supporting material (302) to the stage (14) and merge the multiple liquid droplets of the modeling material (301) into a liquid droplet of the modeling material (301) in the air and the multiple liquid droplets of the supporting material (302) into a liquid droplet of the supporting material (302) in the air; and
a curing device (13) configured to cure the liquid droplet of modeling material (301) and the liquid droplet of supporting material (302) on the stage (14) to form a layered object (30),
wherein the discharging device (11;12) is configured to stand still at least when the discharging device (11;12) discharges the multiple liquid droplets of the modeling material (301) and the multiple liquid droplets of the supporting material (302) to a boundary area of the modeling material (301) and the supporting material on the stage (14).

**Patentansprüche**

1. Verfahren zur Herstellung eines festen Freiformfertigungsobjekts (17), umfassend:

Entladen mehrerer flüssiger Tröpfchen aus Modelliermaterial (301) und mehrerer flüssiger Tröpfchen aus Stützmaterial (302) auf ein Gestell (14) durch eine Entladevorrichtung (11; 12);
Mischen der mehreren flüssigen Tröpfchen aus Modelliermaterial (301) in ein flüssiges Tröpfchen aus Modelliermaterial (301) in der Luft und der mehreren flüssigen Tröpfchen aus Stützmaterial (302) in ein flüssiges Tröpfchen aus Stützmaterial (302) in der Luft;

Aushärten des flüssigen Tröpfchens aus Modelliermaterial (301) und des flüssigen Tröpfchens aus Stützmaterial (302) auf dem Gestell (14) zur Bildung eines geschichteten Fertigungsobjekts (30); und

Wiederholen des Entladens und Aushärtens, um das geschichtete Herstellungsobjekt (30) zur Herstellung des festen Freiformherstellungsobjekts (17) zu laminieren,

wobei die Entladevorrichtung (11; 12) mindestens während des Entladens auf einen Grenzbereich des Modelliermaterials (301) und des Stützmaterials (302) auf das Gestell (14) stillsteht.

2. Verfahren nach Anspruch 1, wobei das Gestell (14) gegen die während des Entladens stillstehende Entladevorrichtung (11; 12) bewegt wird.

3. Verfahren nach Anspruch 1, wobei die Entladevorrichtung (11; 12) gegen das während des Entladens stillstehende Gestell (14) bewegt wird.

4. Verfahren nach einem der Ansprüche 1 bis 3, wobei die Anzahl der mehreren flüssigen Tröpfchen aus Modelliermaterial (301) und die Anzahl der mehreren flüssigen Tröpfchen aus Stützmaterial (302) zwei oder drei ist.

5. Verfahren nach einem der Ansprüche 1 bis 4, wobei das Stützmaterial (302) wasserlöslich ist.

6. Verfahren zur Herstellung eines festen Freiformfertigungsobjekts (17), umfassend:

Entladen mehrerer flüssiger Tröpfchen aus Modelliermaterial (301) und mehrerer flüssiger Tröpfchen aus Stützmaterial (302) auf ein stillstehendes Gestell (14) durch eine Entladevorrichtung (11; 12);

Mischen der mehreren flüssigen Tröpfchen aus Modelliermaterial (301) in ein flüssiges Tröpfchen aus Modelliermaterial (301) und der mehreren flüssigen Tröpfchen aus Stützmaterial (302) in ein flüssiges Tröpfchen aus Stützmaterial (302) in der Luft;

Aushärten des flüssigen Tröpfchens aus Modelliermaterial (301) und des flüssigen Tröpfchens aus Stützmaterial (302) auf dem Gestell (14) zur Bildung eines geschichteten Fertigungsobjekts (30); und

Wiederholen des Entladens und Aushärtens, um das geschichtete Herstellungsobjekt (30) zur Herstellung des festen Freiformherstellungsobjekts (17) zu laminieren,

wobei sich die Entladevorrichtung (11; 12) während des Entladens gegen das Gestell (14) bewegt und die Entladevorrichtung (11; 12) während des Entladens auf einen Grenzbereich des Modelliermaterials und des Stützmaterials auf dem Gestell (14) die Bewegungsgeschwindigkeit verringert.

7. Verfahren nach Anspruch 6, wobei die Anzahl der mehreren flüssigen Tröpfchen aus Modelliermaterial (301) und die Anzahl der mehreren flüssigen Tröpfchen aus Stützmaterial (302) zwei oder drei ist.

8. Verfahren nach Anspruch 6 oder 7, wobei das Stützmaterial (302) wasserlöslich ist.

9. Vorrichtung (10) zur Herstellung eines festen Freiformherstellungsobjekts (17), umfassend:

eine Steuereinheit (500), die konfiguriert ist, um die Vorrichtung (10) zu steuern;
ein Gestell (14);
eine Entladevorrichtung (11; 12), die konfiguriert ist, um mehrere flüssige Tröpfchen aus Modelliermaterial (301) und mehrere flüssige Tröpfchen aus Stützmaterial (302) auf das Gestell (14) zu entladen und die mehreren flüssigen Tröpfchen aus Modelliermaterial (301) in ein flüssiges Tröpfchen aus Modelliermaterial (301) in der Luft zu mischen und die mehreren flüssigen Tröpfchen aus Stützmaterial (302) in ein flüssiges Tröpfchen aus Stützmaterial (302) in der Luft zu mischen; und

eine Aushärtvorrichtung (13), die konfiguriert ist, um das flüssige Tröpfchen aus Modelliermaterial (301) und das flüssige Tröpfchen aus Stützmaterial (302) auf dem Gestell (14) zur Bildung eines geschichteten Objekts (30) auszuhärten,

wobei die Entladevorrichtung (11; 12) konfiguriert ist, um mindestens, wenn die Entladevorrichtung (11; 12) die mehreren flüssigen Tröpfchen aus Modelliermaterial (301) und die mehreren flüssigen Tröpfchen aus Stützmaterial (302) auf einen Grenzbereich des Modelliermaterials (301) und des Stützmaterials auf dem Gestell (14) entlädt, stillzustehen.

**Revendications**

1. Procédé de fabrication d'un objet de fabrication de forme libre solide (17), comprenant :

   la décharge de multiples gouttelettes liquides de matériau de modélisation (301) et de multiples gouttelettes liquides de matériau de support (302) sur un plateau (14) par un dispositif de décharge (11 ; 12) ;
   la fusion des multiples gouttelettes liquides du matériau de modélisation (301) en une gouttelette liquide du matériau de modélisation (301) dans l'air et des multiples gouttelettes liquides du matériau de support (302) en une gouttelette liquide du matériau de support (302) dans l'air :

      le durcissement de la gouttelette liquide du matériau de modélisation (301) et de la gouttelette liquide du matériau de support (302) sur le plateau (14) permettant de former un objet de fabrication stratifiée (30) ; et
      la répétition de la décharge et du durcissement permettant de laminer l'objet de fabrication stratifié (30) afin de fabriquer l'objet de fabrication de forme libre solide (17),

   dans lequel le dispositif de décharge (11 ; 12) reste immobile pendant au moins la décharge vers une zone limite du matériau de modélisation (301) et du matériau de support (302) sur le plateau (14).

2. Procédé selon la revendication 1, dans lequel le support (14) est déplacé contre le dispositif de décharge (11 ; 12) qui reste immobile pendant le déchargement.

3. Procédé selon la revendication 1, dans lequel le dispositif de décharge (11 ; 12) se déplace contre le plateau (14) qui reste immobile pendant la décharge.

4. Procédé selon l'une quelconque des revendications 1 à 3, dans lequel le nombre des multiples gouttelettes liquides du matériau de modélisation (301) et le nombre des multiples gouttelettes liquides du matériau de support (302) sont de deux ou trois.

5. Procédé selon l'une quelconque des revendications 1 à 4, dans lequel le matériau de support (302) est soluble dans l'eau.

6. Procédé de fabrication d'un objet de fabrication de forme libre solide (17), comprenant :

   la décharge de multiples gouttelettes liquides du matériau de modélisation (301) et de multiples gouttelettes liquides du matériau de support (302) sur un plateau (14) qui reste immobile par un dispositif de décharge (11 ; 12) ;
   la fusion de multiples gouttelettes liquides du matériau de modélisation (301) en une gouttelette liquide du matériau de modélisation (301) et les multiples gouttelettes liquides du matériau de support (302) en une gouttelette liquide du matériau de support (302) dans l'air ;
   le durcissement de la gouttelette liquide du matériau de modélisation (301) et de la gouttelette liquide du matériau de support (302) sur le plateau (14) afin de former un objet de fabrication stratifié (30), et
   la répétition de la décharge et du durcissement permettant de stratifier l'objet de fabrication stratifié (30) afin de fabriquer l'objet de fabrication de forme libre solide (17),
   dans lequel le dispositif de décharge (11 ; 12) se déplace contre le plateau (14) pendant la décharge et le dispositif de décharge (11 ; 12) réduit la vitesse de déplacement pendant la décharge vers une zone limite du matériau de modélisation et du matériau de support sur le plateau (14).

7. Procédé selon la revendication 6, dans lequel le nombre de multiples gouttelettes liquides du matériau de modélisation (301) et le nombre de multiples gouttelettes liquides de matériau de support (302) sont de deux ou trois.

8. Procédé selon la revendication 6 ou 7, dans lequel le matériau de support (302) est soluble dans l'eau.

9. Dispositif (10) permettant de fabriquer un objet de fabrication de forme libre solide (17), comprenant :

   une unité de commande (500) configurée afin de commander le dispositif (10) ;
   un plateau (14) ;
   un dispositif de décharge (11 ; 12) configuré afin de décharger de multiples gouttelettes liquides de matériau de modélisation (301) et de multiples gouttelettes liquides de matériau de support (302) sur le plateau (14) et de fusionner les multiples gouttelettes liquides du matériau de modélisation (301) dans une gouttelette liquide du matériau de modélisation (301) dans l'air et les multiples gouttelettes liquides du matériau de support (302) dans une gouttelette liquide du matériau de support (302) dans l'air ; et

un dispositif de durcissement (13) configuré afin de durcir la gouttelette liquide du matériau de modélisation (301) et la gouttelette liquide de matériau de support (302) sur le plateau (14) permettant de former un objet stratifié (30),

dans lequel le dispositif de décharge (11 ; 12) est configuré afin de rester immobile au moins lorsque le dispositif de décharge (11 ; 12) décharge les multiples gouttelettes liquides du matériau de modélisation (301) et les multiples gouttelettes liquides du matériau de support (302) à une zone limite du matériau de modélisation (301) et du matériau de support sur le plateau (14).

# FIG. 1

EP 3 385 075 B1

# FIG. 2

# FIG. 3

EP 3 385 075 B1

# FIG. 4A

FIG. 4

| FIG. 4A |
|---------|
| FIG. 4B |

500

500A

501  502  503  504

CPU  ROM  RAM  NVRAM

600

FABRICATION
DATA
CREATING
DEVICE

506

EXTERIOR
I/F

505  507

ASIC  I/O

522

OPERATION
PANEL

TEMPERATURE
AND HUMIDITY
SENSOR

560

SENSORS

# FIG. 4B

508

| HEAD DRIVE CONTROL UNIT | → | HEAD DRIVE CONTROL UNIT | 11 |

509

| HEAD DRIVE CONTROL UNIT | → | HEAD DRIVE CONTROL UNIT | 12 |

510

| MOTOR DRIVE UNIT | → | X-AXIS DIRECTION SCANNING MECHANISM | 550 |

511

| MOTOR DRIVE UNIT | → | Y-AXIS DIRECTION SCANNING MECHANISM | 552 |

513

| MOTOR DRIVE UNIT | → | STAGE X-AXIS DIRECTION SCANNING MECHANISM | 553 |

514

| MOTOR DRIVE UNIT | → | Z-AXIS LIFTING DEVICE | 15 |

516

| MOTOR DRIVE UNIT | → | MOTOR (FOR ROLLER ROTATION) | 26 |

518

| MAINTENANCE DRIVE UNIT | → | MAINTENANCE MECHANISM | 61 |

519

| CURING CONTROL UNIT | → | UV RAY IRRADIATOR | 13 |

# FIG. 5A

# FIG. 5B

# FIG. 6A

P1　　　　　　　P2　　　　　　　P3

Ve

0V

# FIG. 6B

D1 ⬇ Vj1

D2 ⬇ Vj2

D1 ⬇ Vj1

D3 ⬇ Vj3

D2 ⬇ Vj2

D1 ⬇ Vj1

MERGED

D

# FIG. 7

# FIG. 8A

Dm (301)

A

14

# FIG. 8B

Dm    Ds(302)    Dm (301)

A

14

B

# FIG. 9

(301) (302)
Dm  Ds                    ⟶ A

Y
↑
│
└─⟶ X

B

# FIG. 10

EP 3 385 075 B1

# FIG. 11A

# FIG. 11B

# FIG. 12

(301) (302)
Dm   Ds

Y

X

B

FIG. 13A

FIG. 13B

POSITION ON X-AXIS DIRECTION

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016096054 A1

- US 2016325502 A1